# EUROPEAN PATENT SPECIFICATION

(11) **EP 2 202 138 B1**
(45) Date of publication and mention of the grant of the patent: **10.04.2013**
(21) Application number: 09014755.4
(22) Date of filing: 26.11.2009
(51) Int. Cl.: B62J 17/02

(54) **Saddle-riding vehicle**
Sattelfahrzeug
Véhicule de type à enfourcher

(30) Priority: 26.12.2008 JP 2008335002
(43) Date of publication of application: 30.06.2010
(73) Proprietor: Yamaha Hatsudoki Kabushiki Kaisha, Iwata-shi, Shizuoka 438-8501 (JP)
(72) Inventor: Akao, Takuya, Iwata-shi Shizuoka 438-8501 (JP)
(74) Representative: Grünecker, Kinkeldey, Stockmair & Schwanhäusser

(56) References cited:
- EP-A2- 0 960 808
- EP-A2- 1 275 830
- JP-A- 8 127 377

## Description

The present invention relates to a saddle-riding vehicle wherein a radiator is placed underneath a footboard on which a rider's feet are rested.

In saddle-riding vehicles such as two-wheeled motor vehicles, radiators are widely used for cooling a coolant that has absorbed the heat of an engine. The radiator has a main surface. The main surface is formed by a cooling tube through which the coolant flows and a cooling fin adjacent to the cooling tube. The radiator emits the heat of the coolant to a cooling draft flowing in from the main surface and passing through the radiator.

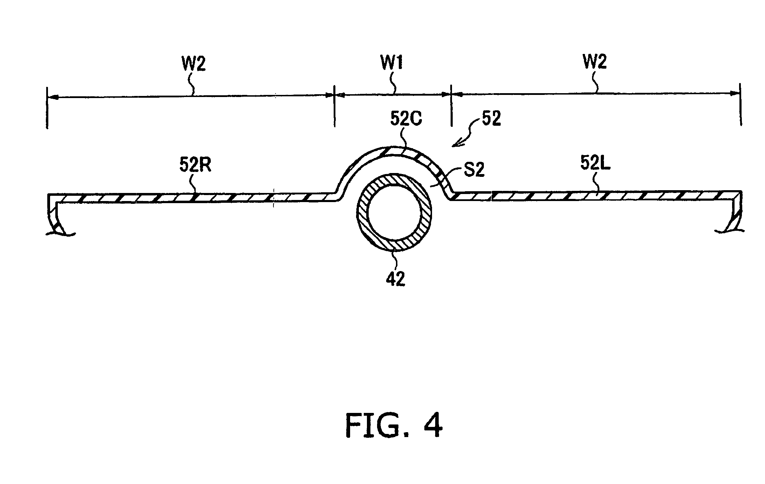

This type of radiator is used in a saddle-riding vehicle having a footboard on which rest the rider's feet, or a so-called scooter-type two-wheeled motor vehicle. For example, in Japanese Utility Model Publication No. S62-38471 (Page 1, Fig. 4), a technique is known in which a flat plate-shaped radiator is placed underneath the footboard in a scooter-type two-wheeled motor vehicle. It is difficult to ensure space for the upright mounting of a radiator underneath the footboard. Therefore, the radiator is laid horizontally underneath the footboard.

However, in the aforesaid Japanese Utility Model Publication, the main surface is arranged facing downward, and the cooling draft flows toward the radiator from the front of the vehicle body. Therefore, much of the cooling draft does not flow orthogonal to the main surface or enter into the radiator from the main surface, but rather flows toward the rear of the vehicle body along the main surface. Therefore, this type of radiator has a problem in that heat exchange cannot be performed efficiently. The present invention was devised in view of such circumstances.

The prior art document EP 0 960 808 A2 discloses a saddle-riding vehicle having an engine as a driving source, wherein the radiator for cooling said engine is arranged within a leg shield. Said leg shield is configured to avoid interference with a front wheel such that both of its lateral ends are located further forward than a central section thereof. Inside of said ends louvers are provided and a running wind is introduced from said louvers to be sent to the side of the radiator. The radiator is arranged under the footboard of the vehicle and inclined with regard to the driving direction of the vehicle. In particular, said radiator is provided with a top surface being inclined with regard to the longitudinal direction of the vehicle. Said vehicle comprises a head pipe with a down tube arrangement extending therefrom in rearward and downward direction. Said down tube arrangement is covered by a center cover which protrudes upwardly between the two main footrests and extends in longitudinal direction in a tunnel-like fashion. Within said center cover a cylinder section of the engine is disposed upwardly of the radiator. An intake air chamber is arranged in front of said cylinder section and above the radiator. In particular, said air chamber is disposed under a central pipe of the frame immediately behind the head pipe, and by using a lower surface of said air chamber as part of a wind plate, a running wind passing therethrough is guided toward the radiator.

It is an objective of the present invention to provide a saddle-riding vehicle wherein a coolant can be efficiently cooled in a radiator placed underneath a footboard.

According to the present invention, said objective is solved by a saddle-riding vehicle having the features of independent claim 1. Preferred embodiments are laid down in the dependent claims.

Accordingly, it is provided a saddle-riding vehicle comprising: a vehicle body and a driving source; a front cover part being provided with a front opening which opens toward a front of the vehicle body, said front cover part comprising a ventilation duct configured to pass air that has flowed in from the front opening toward a radiator configured to cool the driving source; a footboard part on which rider's feet can be rested, the footboard part extending toward a rear of the vehicle body from a rear part of the front cover part; and the radiator being placed lower than the footboard part, with a main surface of the radiator being oriented horizontally or inclined, wherein at least part of the main surface is positioned farther forward in the vehicle body than a downward imaginary extension surface of a portion of the front cover part constituting a rear wall of the ventilation duct.

In such a saddle-riding vehicle, the radiator is placed lower than the footboard part. Preferably, the front of the radiator is covered by a wind guard cover. The main surface of the radiator is arranged in a horizontal or inclined orientation. At least part of the main surface of the radiator is positioned farther forward in the vehicle body than the downward imaginary extension surface of the portion of the front cover part constituting the rear wall of the ventilation duct provided to the front cover part. Therefore, air passing through the ventilation duct flows mostly orthogonal to the main surface of the radiator, and the air is fed efficiently into the radiator. Heat exchange can thereby be performed efficiently in the radiator.

A down frame extends downward from a steering head pipe, and the front cover part encloses a periphery of the down frame and, preferably, is separated from the down frame. A front of the radiator is covered by a wind guard cover extending downward from a bottom edge of the front opening.

Further, preferably a front wheel is attached to the vehicle body in front of the front cover part, and the front opening is positioned higher than the front wheel.

Still further, preferably a side frame extends toward the rear of the vehicle body from a bottom part of the down frame and, preferably, the driving source is swingably attached to the side frame.

According to a preferred embodiment, a bottom part of the front cover part constitutes the ventilation duct, and/or an air blower is configured to blow air to the radiator, the air blower being preferably placed in vertical alignment with the radiator.

Preferably, the air blower is placed above the main surface of the radiator.

Further, preferably the air blower is configured to blow air downward from above the radiator.

According to another preferred embodiment, a lower cover part extends toward the rear of the vehicle body from a bottom part of the wind guard cover in a lower position than the footboard part, the main surface of the radiator represents a top surface of the radiator, wherein the radiator has a bottom surface provided on a side opposite the main surface, and at least a portion of the bottom surface and both sides of the radiator are preferably covered by the lower cover part, and, preferably, a bottom opening that opens downward is provided in a portion of the lower cover part that faces the bottom surface.

Preferably, the footboard part is shaped as a flat plate.

Further, preferably the footboard part comprises a pair of flat plate parts and a convex part preferably formed into an upward convex shape, the convex part extends in longitudinal direction of the vehicle body between the pair of flat plate parts, a down frame preferably extends toward the rear of the vehicle body along a space provided on the inside of the convex part, and widths of the pair of flat plate parts in vehicle width direction are preferably greater than a width of the convex part.

Still further, preferably the front opening is positioned higher than the radiator.

Yet further still, preferably the main surface of the radiator is substantially orthogonal to a direction in which air flows through the ventilation duct.

Preferably, a wind guard member is placed below the footboard part and, preferably, extends toward the footboard part from a rear portion of the main surface of the radiator.

Further, preferably a seat on which a rider can sit is provided and a fuel tank configured to store fuel to be supplied to the driving source is placed below the seat.

Still further, preferably the radiator has a radiator core through which cooling water flows and at least one radiator tank configured to store the cooling water, and the radiator tank is preferably placed on a side of the radiator core.

According to the above, it is possible to provide a saddle-riding vehicle wherein heat exchange can be efficiently performed in a radiator placed below a footboard.

In the following, the present invention is explained in greater detail by means of embodiments thereof in conjunction with the accompanying drawings, wherein:
- FIG. 1: is a left side view of the two-wheeled motor vehicle according to an embodiment;
- FIG. 2: is a front view of the two-wheeled motor vehicle according to an embodiment;
- FIG. 3: is a perspective view of the footboard according to an embodiment;
- FIG. 4: is a schematic cross-sectional view of the footboard and the down frame along line A-A in FIG. 1;
- FIG. 5: is a plan view of the vehicle body frame and the radiator in a state in which the vehicle body cover has been removed;
- FIG. 6: is a perspective view of the vehicle body frame and the radiator in a state in which the vehicle body cover has been removed;
- FIG. 7: is a schematic cross-sectional view illustrating the detailed configuration of the radiator periphery; and
- FIG. 8: is a perspective view of the two-wheeled motor vehicle according to an embodiment.

The following reference signs are used in the figures:
- F: Air
- S1, S2: Spaces
- W1, W2: Widths
- L1: Imaginary extension surface
- 10: Two-wheeled motor vehicle
- 21: Front wheel
- 22: Rear wheel
- 23: Front fender
- 24: Front fork
- 25: Seat
- 26: Fuel tank
- 30: Engine unit
- 31: Engine
- 31a: Cylinder part
- 31b: Crankcase
- 32: Transmission unit
- 33: Cushion unit
- 41: Steering head pipe
- 42: Down frame
- 42a: Bending portion
- 43, 43L, 43R: Side frames
- 45: Pivot part
- 48: Cross frame
- 48a: Link
- 51: Front cover
- 51a: Rear part
- 51D: Bottom part
- 51U: Top part
- 52: Footboard
- 52C: Convex part
- 52L: Left flat plate
- 52R: Right flat plate
- 53: Lower cover
- 56, 57: Brackets
- 60: Radiator unit
- 61: Radiator
- 61L: Left tank
- 61R: Right tank
- 62: Fan
- 63, 64: Water passages
- 71: Battery
- 90: Ventilation duct
- 91: Front opening
- 92: Bottom opening
- 95: Wind guard plate
- 511: Inner fender
- 511D: Bottom part
- 512: Rising part
- 512C: Convex part
- 512L, 512R: Concave parts
- 610: Radiator core
- 611: Main surface
- 612: Bottom surface
- 615: Cooling fin
- 616: Cooling tube

Next, the configuration of a saddle-riding vehicle according to an embodiment will be described with reference to the drawings. Specifically, given below are descriptions of (1) the overall schematic configuration of a saddle-riding vehicle, (2) the configuration of a front cover, a lower cover, and a footboard, (3) the configuration of a vehicle body frame and a radiator, (4) the detailed configuration of the periphery of the radiator, (5) the operation and effects, and (6) other embodiments.

In the following description of the drawings, identical or similar components are denoted by identical or similar numerical symbols. It should be noted that the drawings merely schematic representations whose dimensional ratios and other features are different from the actual ratios and features.

Therefore, the specific dimensions and other features should be determined with consideration of the following descriptions. It is apparent that different drawings also include components having mutually different dimensional relationships and ratios.

### (1) Overall Schematic Configuration of Saddle-Riding Vehicle

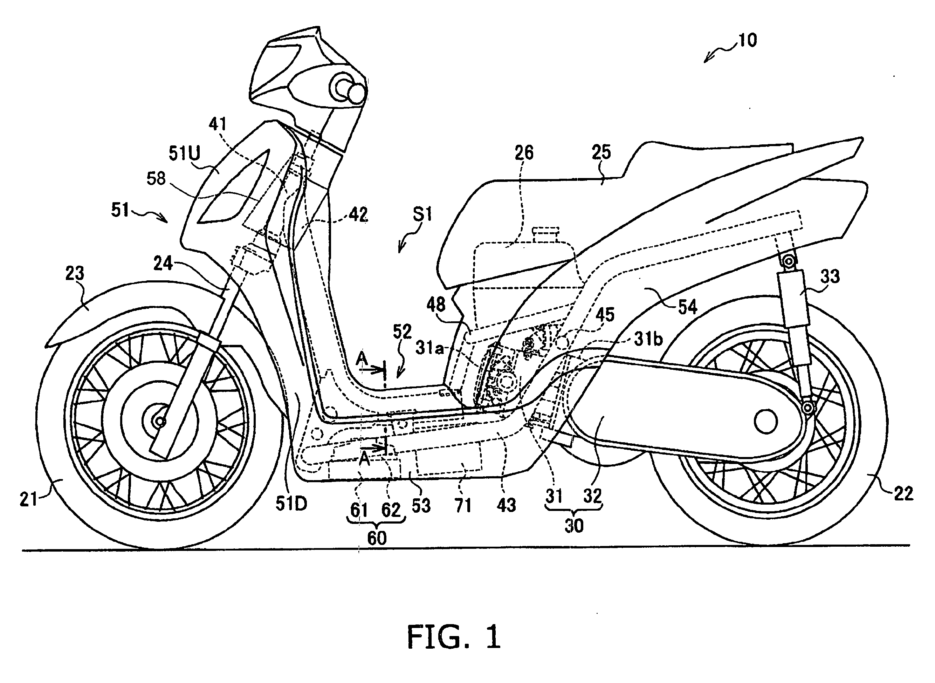

FIG. 1 is a left side view of a two-wheeled motor vehicle 10 as a saddle-riding vehicle according to the present embodiment.

A footrest space S1 is formed in the two-wheeled motor vehicle 10 in front of a seat 25 on which a rider sits, as illustrated in FIG. 1. A footboard 52 (footboard part) is placed below the footrest space S1. Specifically, the two-wheeled motor vehicle 10 is a so-called scooter-type two-wheeled motor vehicle.

The footboard 52 on which the rider places his/her feet is provided at the bottom of the vehicle. A fuel tank 26 for storing fuel supplied to an engine (driving source) 31 is placed below the seat 25. The fuel tank 26 is placed above the engine 31 on the inside of a rear cover 54.

The two-wheeled motor vehicle 10 includes a front wheel 21 and a rear wheel 22, and the rear wheel 22 is driven by a drive force produced by the engine 31. The front wheel 21 and the rear wheel 22 have outside diameters of 14 inches or greater. The front wheel 21 is rotatably supported by a pair of left and right front forks 24. A front fender 23 for covering the top of the front wheel 21 is provided above the front wheel 21. The front fender 23 is attached to the front forks 24.

The front forks 24 are rotatably supported by a steering head pipe 41. A columnar down frame 42 is joined to the steering head pipe 41. The down frame 42 extends downward from the steering head pipe 41 and bends rearward.

A pair of left and right side frames 43 is joined to the down frame 42. The side frames 43 extend at an upward and rearward incline from below the down frame 42 through the left and right sides of the engine 31. The pair of left and right side frames 43 are joined by a cross frame 48. The cross frame 48 supports the fuel tank 26.

The side frames 43 include a pivot part 45 for swingably supporting the top part of the engine 31. The engine 31 is a four stroke engine that includes a cylinder part 31 a and a crankcase 31 b connected to the cylinder part 31 a.

A transmission unit 32 for transmitting drive force to the rear wheel 22 is provided to the left of the crankcase 31 b. Joined to the rear end of the transmission unit 32 is a bottom end of a cushion unit 33 for absorbing impact received by the rear wheel 22. The top end of the cushion unit 33 is joined to the side frames 43.

An engine unit 30 is configured from the engine 31 and the transmission unit 32. The engine unit 30 is arranged so that its cylinder shaft extends substantially along the longitudinal direction of the vehicle. The engine unit 30 is a swinging engine unit capable of swinging vertically about the pivot part 45 as a swinging center.

A front cover 51 (front cover part) is placed in front of the footrest space S1. The front cover 51 encloses the periphery of the down frame 42 in a state in which the cover is separated from the down frame 42. In other words, the front cover 51 is formed into a hollow shape.

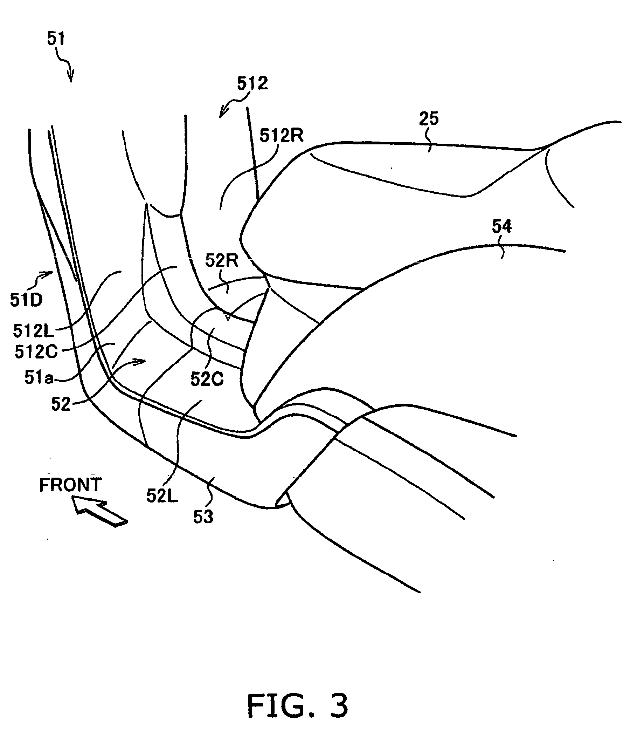

The top part 51 U of the front cover 51 encloses the periphery of the down frame 42 and the periphery of the steering head pipe 41. The rear surface of the top part 51 U is provided with a storage part 58 for storing beverage containers or small articles. The storage part 58 has a shape concaved forward from the rear surface of the top part 51 U. A bottom part 51 D of the front cover 51 is joined to the footboard 52. Specifically, the footboard 52 is joined to a rear part 51 a (see FIG. 3) of the front cover 51.

The footboard 52 is formed to be substantially flat. The footboard 52 covers the top of the down frame 42 and the tops of the side frames 43.

A radiator unit 60 and a battery 71 are placed below the footboard 52. The radiator unit 60 and the battery 71 are placed between the pair of left and right side frames 43.

The radiator unit 60 includes a radiator (e.g. a single radiator) 61 and a fan 62 (air blower). The radiator 61 has a flat plate shape and is arranged to be substantially horizontal. Cooling water flowing through the interior of the engine 31 is fed into the radiator 61. Heat from the cooling water is taken by the air passing through the radiator 61, and the engine 31 is cooled. Accordingly, the radiator 61 is configured to cool the engine 31.

The fan 62 is placed above the radiator 61. The fan 62 has an electric motor (not shown), and air is blown into the radiator 61 by the driving of the electric motor. A lower cover 53 (lower cover part) is disposed below and to the sides of the radiator unit 60 and the battery 71.

### (2) Configuration of Front Cover, Lower Cover, and Footboard

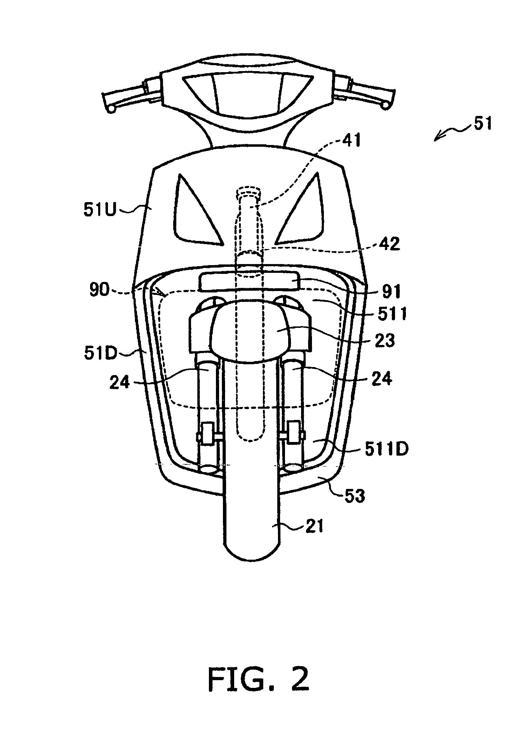

FIG. 2 is a front view of the two-wheeled motor vehicle 10.

The front cover 51 includes an inner fender 511 for covering the rear of the front fender 23 and the rears of the front forks 24, as illustrated in FIG. 2. A front opening 91 which opens to the front of the vehicle body is formed in the inner fender 511. In the present embodiment, the inner fender 511 extends downward from the bottom edge of the front opening 91, constituting a wind guard cover for covering the front of the radiator 61.

The front opening 91 is formed along the vehicle width direction in a higher position than the front fender 23. The bottom part 51 D of the front cover 51 is provided with a ventilation duct 90 for passing the air that has flowed in from the front opening 91. In other words, the inside surface of the hollow front cover 51 is also used to form the ventilation duct 90. In general, the front cover 51 comprises the ventilation duct 90, which is configured to pass air that has flowed in from the front opening 91 toward the aforesaid radiator 61.

FIG. 3 is a perspective view of the footboard 52.

The footboard 52 is configured from a left flat plate 52L, a right flat plate 52R, and a convex part 52C, as illustrated in FIG. 3.

The left flat plate 52L and the right flat plate 52R are shaped as flat plates. The convex part 52C extends along the longitudinal direction of the vehicle body between the left flat plate 52L and the right flat plate 52R. The convex part 52C is formed into a convex shape protruding upward.

The front cover 51 includes a rising part 512 which rises upward from the front end of the footboard 52. The inside surface of the rising part 512 constitutes the rear surface of the ventilation duct 90.

The rising part 512 includes a convex part 512C and concave parts 512L, 512R. The convex part 512C is positioned to the rear of the down frame 42. The convex part 512C curves rearward along the external peripheral shape of the down frame 42. The concave parts 512L, 512R are positioned to the left and right sides of the convex part 512C. The concave parts 512L, 512R curve forward in order to avoid interfering with the rider's feet.

FIG. 4 is a schematic cross-sectional view of the footboard 52 and the down frame 42 along line A-A in FIG. 1.

The top of the down frame 42 is positioned in a space S2 formed on the inside of the convex part 52C, as illustrated in FIG. 4. The convex part 52C curves upward along the external peripheral shape of the down frame 42.

The left flat plate 52L and the right flat plate 52R have an equal width W2. The width W2 is greater than the width W1 of the convex part 52C.

### (3) Configuration of Vehicle Body Frame and Radiator

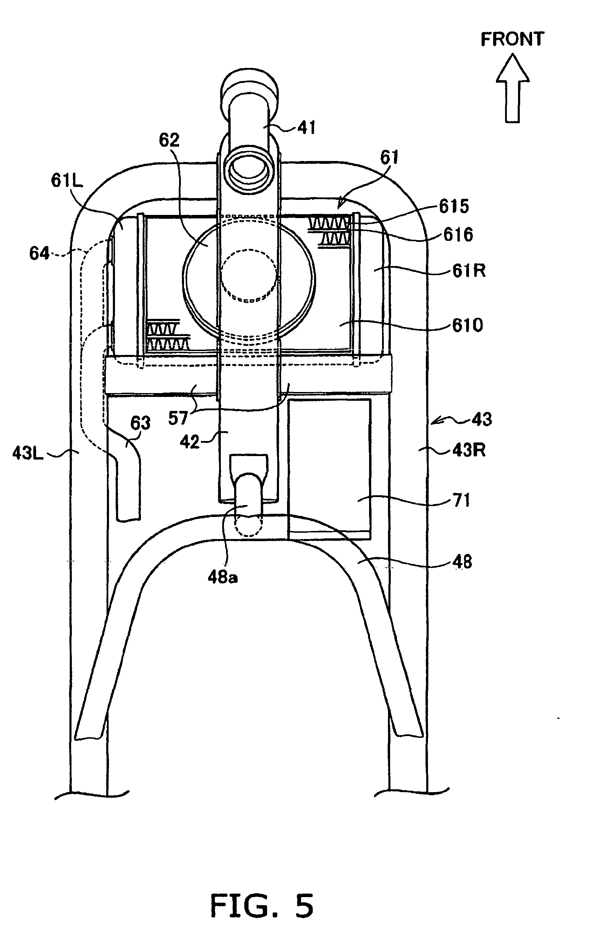

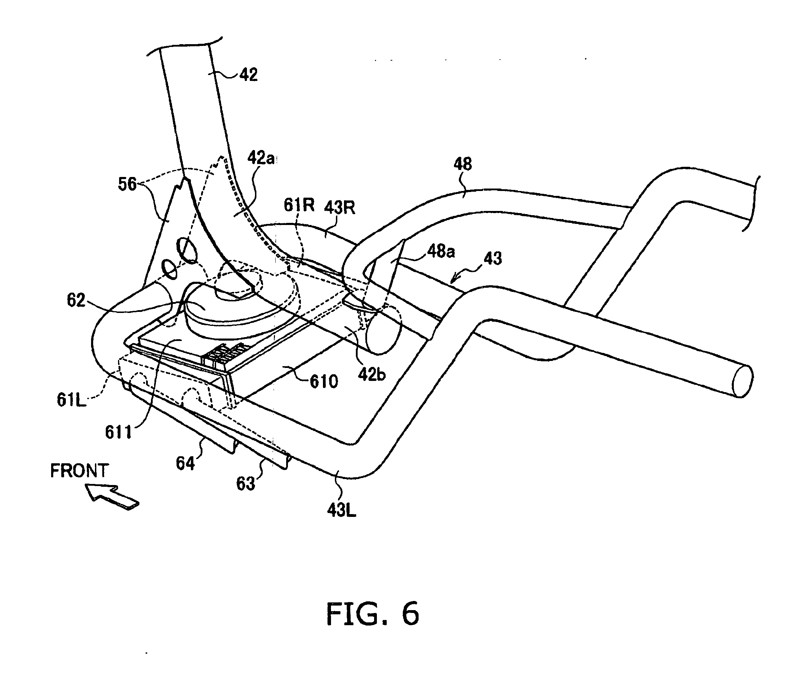

FIG. 5 is a plan view of the vehicle body frame and the radiator 61 in a state in which the vehicle body cover has been removed. FIG. 6 is a perspective view of the vehicle body frame and the radiator 61 in a state in which the vehicle body cover has been removed.

In this two-wheeled motor vehicle 10, a plurality of radiators formed separately is not provided, but only one radiator 61 is provided. The radiator 61 includes a radiator core 610, a left tank 61 L, and a right tank 61 R, as illustrated in FIG. 5. The left tank 61 L and the right tank 61 R each constitute a radiator tank in which cooling water is stored. The left tank 61 L is connected to the radiator core 610 on the left side of the radiator core 610. The right tank 61 R is connected to the radiator core 610 on the right side of the radiator core 610. The fan 62 is placed in the center of the radiator core 610.

One ends of water passages 63, 64 are connected to the left tank 61 L. The other ends of the water passages 63, 64 are connected to the cylinder part 31 a of the engine 31. Cooling water heated in the cylinder part 31 a of the engine 31 is fed to the left tank 61 L via the water passage 63, and also to the right tank 61 R through the rear part of the radiator core 610. The cooling water fed to the right tank 61 R is fed again to the left tank 61 L through the front part of the radiator core 610, and is delivered to the cylinder part 31 a of the engine 31 via the water passage 64.

The radiator core 610 includes cooling tubes 616 and cooling fins 615. The cooling tubes 616 are placed along the vehicle width direction and are arranged at fixed intervals in the vehicle longitudinal direction. Cooling water flows into the cooling tubes 616. The cooling fins 615 are provided adjacent to the cooling tubes 616 and in between the cooling tubes 616. The cooling fins 615 are formed by bending metal plates multiple times.

The side frames 43 extend along the vehicle longitudinal direction through the left and right sides of the radiator 61 from a point in front of the front end of the radiator 61. The space between the left and right side frames 43L, 43R in the vehicle width direction substantially coincides with the width of the radiator 61. The water passages 63, 64 are partially placed below the left side frame 43L.

The left and right side frames 43L, 43R are joined to the down frame 42 via a bracket 57. The bracket 57 is provided behind the fan 62 in order to avoid interfering with the fan 62. The distance between the front ends of the side frames 43 and the bracket 57 substantially coincides with the length of the radiator 61 in the longitudinal direction of the vehicle body.

The battery 71 is placed between the right side frame 43R and the down frame 42. The water passages 63, 64 are partially placed between the left side frame 43L and the down frame 42.

The center of the cross frame 48 and the rear end of the down frame 42 are connected by a link 48a. The cross frame 48 has a U shape curved to be convex toward the front. The cross frame 48 is formed into a shape such that the space enclosed by the cross frame 48 widens toward the rear in the vehicle width direction. Interference between the cross frame 48 and the engine 31 (the cylinder part 31a) is thereby avoided.

The down frame 42 includes a bending portion 42a which is bent toward the rear, and a rear end extending rearward from the bending portion 42a, as illustrated in FIG. 6. The radiator unit 60 (radiator 61, fan 62) is placed below the bending portion 42a.

Connected to the bending portion 42a is a pair of left and right brackets 56 extending at a downward and forward incline from the bending portion 42a. The front ends of the side frames 43 are connected to the bottom ends of the brackets 56. The brackets 56 are disposed in front of the radiator 61. Therefore, when the vehicle rides up on a curb, the brackets 56 can protect the radiator 61. In FIG. 6, illustrations of the bracket 57 and the battery 71 illustrated in FIG. 5 are omitted.

### (4) Detailed Configuration of Radiator Periphery

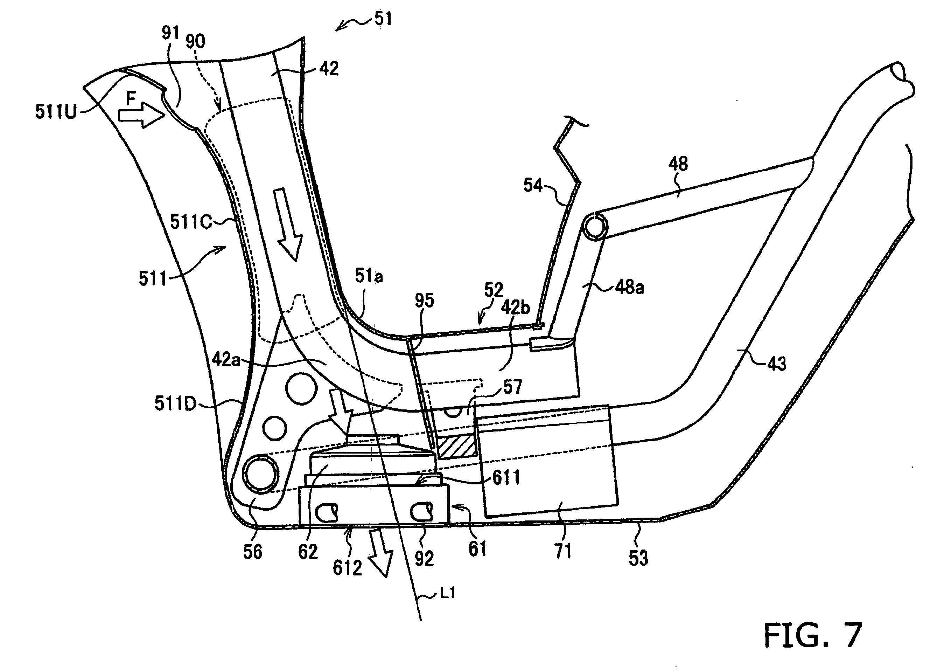

FIG. 7 is a schematic cross-sectional view illustrating the detailed configuration of the radiator periphery.

The radiator 61 has a main surface 611 that faces the flow of air F passing through the ventilation duct 90, as illustrated in FIG. 7. The main surface 611 is positioned on the top surface of the radiator 61. Part of the main surface 611 is positioned farther forward in the vehicle body than a downward imaginary extension surface L1 of the front cover 51 that forms the rear wall of the ventilation duct 90. The main surface 611 is disposed so as to intersect the imaginary extension surface L1. Specifically, the main surface 611 is substantially orthogonal to the direction in which the air F flows through the ventilation duct 90.

The extension direction of the imaginary extension surface L1 is substantially parallel to an axial line in the linear portion of the down frame 42 in a side view of the vehicle. In cases in which "the front cover part forming the rear wall of the ventilation duct" cannot be recognized as a surface, the imaginary extension surface L1 may be defined by drawing a line substantially parallel to the axial line in the linear portion of the down frame 42 from the rearmost portion (outlet portion) of the ventilation duct in a side view of the vehicle.

The footboard 52 extends toward the rear of the vehicle body from the rear part 51 a of the front cover 51.

The radiator 61 has a bottom surface 612 provided on the opposite side of the main surface 611. The main surface 611 and the bottom surface 612 are surfaces over which air passes, and the main and bottom surfaces are both larger in surface area than the other surfaces of the radiator 61. The front opening 91 is positioned above the radiator 61 and the fan 62.

The bottom and the left and right sides of the radiator 61 are covered by the lower cover 53. Specifically, the lower cover 53 extends toward the rear of the vehicle body from a bottom part 511D of the inner fender 511, in a lower position than the footboard 52. A bottom opening 92 is formed in the lower cover 53, below the bottom surface 612 of the radiator 61.

The inner fender 511 curves along the external peripheral shape of the front wheel 21. Specifically, a center part 511C of the inner fender 511 is positioned rearward of the top part 511U and the bottom part 511D. The center part 511C of the inner fender 511 is also positioned rearward of the left and right sides of the inner fender 511.

Below the footboard 52, a wind guard plate 95 (wind guard member) is placed above the rear end of the radiator 61. The wind guard plate 95 extends toward the footboard 52 from the rear side, respectively a rear portion, of the main surface 611. The wind guard plate 95 is disposed at an incline so as to intersect a plane including the main surface 611.

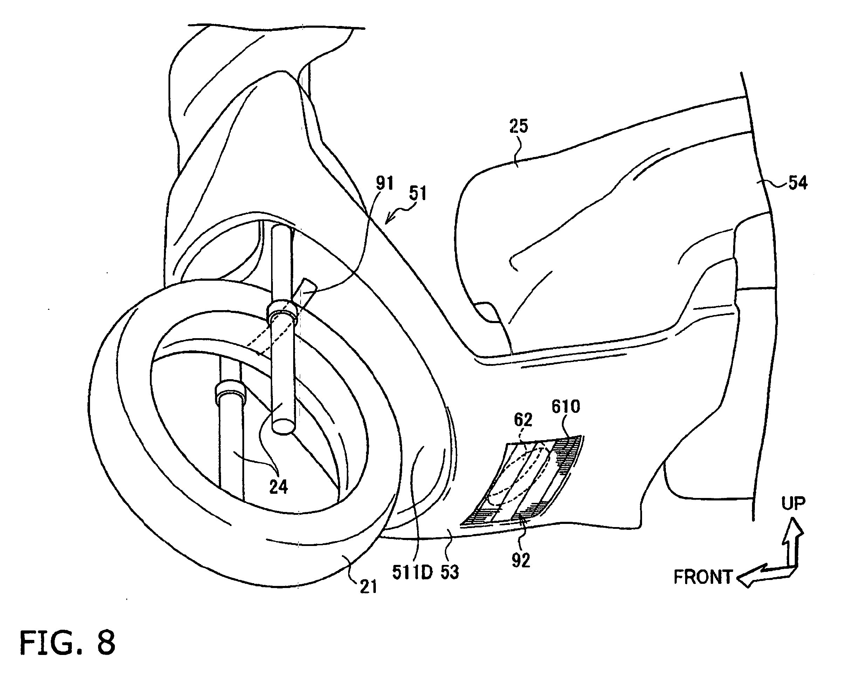

FIG. 8 is a perspective view of the two-wheeled motor vehicle 10 as seen from below.

The bottom opening 92 is formed into a quadrilateral shape so as to substantially coincide with the shape of the bottom surface 612 of the radiator core 610, as illustrated in FIG. 8. Therefore, the surface area of the bottom opening 92 substantially coincides with the surface area of the bottom surface 612 of the radiator core 610.

Next, the flow of air F fed to the radiator 61 will be described using FIG. 7. When the two-wheeled motor vehicle 10 is traveling, a traveling wind (air F) from the front side of the front opening 91 and a traveling wind (air F) flowing over the surface of the inner fender 511 both flow into the front opening 91.

The air F, having flowed into the front opening 91, then flows downward through the ventilation duct 90. Specifically, the air F flows downward along the down frame 42.

The air F passing through the ventilation duct 90 is fed to the main surface 611 from a direction substantially orthogonal to the main surface 611. The air F passes through the radiator core 610 to be discharged downward from the bottom surface 612 of the radiator core 610. Thus, the front opening 91 functions as an air intake port, and the bottom opening 92 functions as an air discharge port.

The fan 62 operates when the temperature of the cooling water has exceeded a specified value. The fan 62 blows air downward from above the radiator 61. In other words, the fan 62 creates a flow of air flowing from the main surface 611 toward the bottom surface 612. When the fan 62 is operating, air F can be blown to the main surface 611 even when the two-wheeled motor vehicle 10 is not moving.

When the two-wheeled motor vehicle 10 stops moving while the fan 62 is not moving, air F heated through the radiator 61 flows upward through the ventilation duct 90, and the air is discharged from the front opening 91. In this case, the bottom opening 92 functions as an air intake port, and the front opening 91 functions as an air discharge port.

### (5) Operation and Effects

In the two-wheeled motor vehicle 10 according to the present embodiment, the radiator 61 is placed lower than the footboard 52, and the front of the radiator 61 is covered by the inner fender 511. Part of the main surface 611 of the radiator 61 is positioned farther forward in the vehicle body than the downward imaginary extension surface L1 of the portion forming the rear wall of the ventilation duct 90 in the front cover 51. Therefore, air F passing through the ventilation duct 90 is efficiently fed to the main surface 611 of the radiator 61. Consequently, a coolant can be efficiently cooled in the radiator 61. Therefore, heat exchange can be efficiently performed in the radiator 61. Since the ventilation duct 90 is formed by the inside surface of the front cover 51, the front cover 51 can also be used to form the ventilation duct 90 without separately providing a special mechanism.

The radiator 61 can be reduced in size by improving the cooling efficiency in the radiator 61. Therefore, the radiator 61 can be accommodated in a small space beneath the footboard 52 without dividing the radiator 61. The cost of the radiator 61 can also be reduced in comparison with dividing the radiator 61. Furthermore, air can be blown by the fan 62 to the radiator 61 even while the two-wheeled motor vehicle 10 is not moving. Therefore, the engine 31 can be prevented from reaching excessively high temperatures even while the two-wheeled motor vehicle 10 is not moving.

In the two-wheeled motor vehicle 10 according to the present embodiment, the portion in the lower cover 53 that faces the bottom surface 612 of the radiator 61 is provided with a bottom opening 92 opening downwardly. Since air F heated through the radiator 61 is discharged downward via the bottom opening 92, the heated air F can be prevented from being emitted toward the engine 31 and the rider.

In the two-wheeled motor vehicle 10 according to the present embodiment, the footboard 52 is shaped as a flat plate. Specifically, the widths W2 of the left flat plate 52L and the right flat plate 52R are both greater in the vehicle width direction than the width W1 of the convex part 52C. The rider's ease of riding can be enhanced by forming the footboard 52 into a substantially flat shape in this manner.

In the two-wheeled motor vehicle 10 according to the present embodiment, the front opening 91 is positioned higher than the radiator 61. Air F taken in from the front opening 91 is thereby fed through the ventilation duct 90 to the main surface 611 of the radiator 61 from above, and air F can therefore be efficiently fed to the radiator 61, which has a substantially horizontal arrangement.

In the two-wheeled motor vehicle 10 according to the present embodiment, the front opening 91 is positioned higher than the front wheel 21. Therefore, air F can be efficiently fed to the radiator 61 because the air F (traveling wind) from a point in front of the two-wheeled motor vehicle 10 is taken into the front opening 91 without being blocked by the front wheel 21.

In the two-wheeled motor vehicle 10 according to the present embodiment, the flat plate-shaped radiator 61 has a substantially horizontal arrangement. Therefore, the height of the radiator 61 in the vertical direction of the vehicle body can be reduced in cases in which the radiator 61 is placed lower than the footboard 52. Therefore, the footboard 52 can be formed substantially flat even in cases in which the radiator 61 is placed below the footboard 52. It is also possible to ensure the minimum ground clearance needed in the lower cover 53 below the radiator 61.

In the two-wheeled motor vehicle 10 according to the present embodiment, the main surface 611 of the radiator 61 is substantially orthogonal to the direction in which air F flows through the ventilation duct 90. Therefore, the air F can be efficiently fed to the main surface 611.

In the two-wheeled motor vehicle 10 according to the present embodiment, the fan 62 for blowing air to the main surface 611 of the radiator 61 is placed above the main surface 611. In other words, the fan 62 is placed above the radiator 61. Therefore, the space between the radiator 61 and the footboard 52 can be increased in size in comparison with a case of placing the fan 62 below the radiator 61. The main surface 611 of the radiator 61 can thereby be more easily made orthogonal to the direction in which air F flows through the ventilation duct 90.

In the two-wheeled motor vehicle 10 according to the present embodiment, the wind guard plate 95 placed below the footboard 52 extends toward the footboard 52 from the rear side of the main surface 611 of the radiator 61. Air F fed from above the main surface 611 can thereby be prevented from flowing toward the rear of the main surface 611, and the quantity of air F passing over the main surface 611 can be increased.

In the two-wheeled motor vehicle 10 according to the present embodiment, the fuel tank 26 is placed below the seat 25, rather than the fuel tank 26 being placed below the footboard 52. Space for placing the radiator 61 and electrical components (battery 71) can thereby be ensured below the footboard 52.

In the two-wheeled motor vehicle 10 according to the present embodiment, the left tank 61 L and the right tank 61 R are placed to the sides of the radiator core 610. The radiator core 610 can therefore be disposed farther forward than in cases in which these tanks are placed in front of and behind the radiator core 610. The air F passing through the ventilation duct 90 is thereby efficiently fed to the main surface 611 of the radiator 61.

To increase the cooling capacity of the radiator 61, consideration has been given to disposing the radiator 61 in a region of the two-wheeled motor vehicle 10 where air readily flows in. For example, the radiator 61 could be disposed in an internal space in the top part 51 U of the front cover 51. However, if the radiator 61 were to be disposed in the internal space in the top part 51 U, a storage part 58 such as is described above could not be provided to the top part 51 U. Alternatively, the capacity of the storage part 58 would be reduced.

In view of this, in the two-wheeled motor vehicle 10 according to the present embodiment, the radiator 61 can be housed below the footboard 52 without reducing the cooling performance of the radiator 61. Therefore, the internal space in the top part 51 U can be used as a space for providing the storage part 58, and a large-capacity storage part 58 can be provided. The space in the top part 51 U can also be used as a space for disposing a lighting device.

Consideration has also been given to disposing the radiator 61 in the bottom part 51 D of the front cover 51 in order to increase the cooling capacity of the radiator 61. However, the space in the bottom part 51 D of the front cover 51 positioned behind the front wheel 21 would be smaller in the case of a front wheel 21 having a large outside diameter. Therefore, the wheel base would have to be larger in order to place the radiator 61 in the bottom part 51 D. In this case, the vehicle would increase in size.

In view of this, in the two-wheeled motor vehicle 10 according to the present embodiment, the radiator 61 can be housed below the footboard 52 without reducing the cooling performance of the radiator 61. Therefore, the size increase of the wheel base can be minimized even if the front wheel 21 has a large outside diameter. The size increase in the vehicle can thereby be minimized.

### (6) Other Embodiments

The present teaching was described above using an embodiment, but the statements and drawings constituting a part of this disclosure should not be interpreted as limiting the teaching. Various alternative embodiments, examples, and applicable techniques will be apparent to those skilled in the art from this disclosure.

In the embodiment, part of the main surface 611 of the radiator 61 was positioned farther forward in the vehicle body than the imaginary extension surface L1, but the entire main surface 611 of the radiator 61 may also be positioned farther forward in the vehicle body than the imaginary extension surface L1.

In the embodiment described above, the bottom opening 92 is formed into a quadrilateral shape that substantially coincides with the shape of the bottom surface 612 of the radiator core 610, but the bottom opening 92 is not limited to a quadrilateral shape and may also be circular or another shape. Alternatively, a configuration having no bottom opening 92 is also possible.

Furthermore, in the embodiment described above, the widths W2 of the left flat plate 52L and the right flat plate 52R in the vehicle width direction are greater than the width W1 of the convex part 52C, but the widths W2 may also be less than the width W1. Alternatively, the footboard 52 can be formed to be entirely flat without providing a convex part 52C.

In the embodiment described above, the front opening 91 is positioned higher than the radiator 61 and the front wheel 21, but part of the front opening 91 may be positioned lower than the radiator 61 and the front wheel 21.

In the embodiment described above, the radiator 61 has a substantially horizontal arrangement, but the radiator 61 may also be arranged at an incline, respectively in a non-horizontal and non-vertical state. The inclination of the main surface 611 of the radiator 61 to a horizontal plane is less than 90°, preferably less than 60°, and in particular preferably less than 30°. For example, the radiator 61 may be arranged at a forward and downward incline in a side view. In this case, the front end of the radiator 61 is positioned lower than the rear end. This type of incline makes it possible for the main surface 611 of the radiator 61 and the direction in which air F flows through the ventilation duct 90 to be made more orthogonal to each other.

In the embodiment described above, the wind guard plate 95 was placed below the footboard 52 and above the rear end of the radiator 61. However, the wind guard plate 95 may also be placed above the front end of the radiator 61. The air F fed from above the main surface 611 can thereby be prevented from flowing toward the front of the main surface 611, and the quantity of air F passing over the main surface 611 can be increased. A configuration having no wind guard plate 95 is also possible.

In the embodiment described above, the fan 62 was placed above the radiator 61, but the fan 62 may also be placed below the radiator 61. Alternatively, a configuration having no fan 62 is also possible. The fan 62 may also blow air downward from above the radiator 61. However, for the sake of inhibiting warm air from reaching the rider, it is preferred that the fan 62 blow air downward from above the radiator 61, as in the embodiment described above.

In the embodiment described above, the front wheel 21 and the rear wheel 22 have an outside diameter of 14 inches or greater, but the wheel diameter may also be less than 14 inches.

In general, the teaching above cannot only be applied to motorcycles, respectively scooter-type vehicles, but to all kinds of saddle-riding vehicles including all-terrain-vehicles, such as quads.

In order to provide a saddle-riding vehicle wherein heat exchange can be efficiently performed in a radiator placed lower than a footboard, a preferred embodiment of a saddle-riding vehicle has a front cover 51 provided with a front opening 91 that opens toward the front of the vehicle body. The front of a radiator 61 placed below a footboard 52 is covered by an inner fender 511, and part of a main surface 611 of the radiator 61 is positioned farther forward in the vehicle body than a downward imaginary extension surface L1 of a portion of the front cover 51 constituting a rear wall of a ventilation duct 90.

## Claims

1. Saddle-riding vehicle comprising:
a vehicle body and a driving source (31), wherein a down frame (42) extends downward from a steering head pipe (41);
a front cover part (51) being provided with a front opening (91) which opens toward a front of the vehicle body, said front cover part (51) comprising a ventilation duct (90) configured to pass air that has flowed in from the front opening (91) toward a radiator (61) configured to cool the driving source (31);
a footboard part (52) on which rider's feet can be rested, the footboard part (52) extending toward a rear of the vehicle body from a rear part (51a) of the front cover part (51); and
the radiator (61) being placed lower than the footboard part (52), with a main surface (611) of the radiator (61) being oriented horizontally or inclined,
wherein at least part of the main surface (611) is positioned farther forward in the vehicle body than a downward imaginary extension surface (L1) of a portion of the front cover part (51) constituting a rear wall of the ventilation duct (90), the front cover part (51) encloses a periphery of the down frame (42), and a front of the radiator (61) is covered by an inner fender (511) extending downward from a bottom edge of the front opening (91).

2. Saddle-riding vehicle according to claim 1, wherein the front cover part (51) is separated from the down frame (42).

3. Saddle-riding vehicle according to claim 1 or 2, wherein a front wheel (21) is attached to the vehicle body in front of the front cover part (51), and the front opening (91) is positioned higher than the front wheel (21).

4. Saddle-riding vehicle according to claim 2 or 3, wherein a side frame (43) extends toward the rear of the vehicle body from a bottom part of the down frame (42) and, preferably, the driving source (31) is swingably attached to the side frame (43).

5. Saddle-riding vehicle according to one of claims 1 to 4, wherein a bottom part (51D,511 D) of the front cover part (51) constitutes the ventilation duct (90), and/or an air blower (62) is configured to blow air to the radiator (61), the air blower (62) being preferably placed in vertical alignment with the radiator (61).

6. Saddle-riding vehicle according to claim 5, wherein the air blower (62) is placed above the main surface (611) of the radiator (61).

7. Saddle-riding vehicle according to claim 5 or 6, wherein the air blower (62) is configured to blow air downward from above the radiator (61).

8. Saddle-riding vehicle according to one of claims 5 to 7, wherein a lower cover part (53) extends toward the rear of the vehicle body from a bottom part of the inner fender (511) in a lower position than the footboard part (52), the main surface (611) of the radiator (61) represents a top surface of the radiator (61), wherein the radiator (61) has a bottom surface (612) provided on a side opposite the main surface (611), and at least a portion of the bottom surface (612) and both sides of the radiator (61) are preferably covered by the lower cover part (53), and, preferably, a bottom opening (92) that opens downward is provided in a portion of the lower cover part (53) that faces the bottom surface (612).

9. Saddle-riding vehicle according to one of claims 1 to 8, wherein the footboard part (52) is shaped as a flat plate.

10. Saddle-riding vehicle according to one of claims 1 to 9, wherein the footboard part (52) comprises a pair of flat plate parts (52L,52R) and a convex part (52C) preferably formed into an upward convex shape, the convex part (52C) extends in longitudinal direction of the vehicle body between the pair of flat plate parts (52L,52R), a down frame (42) preferably extends toward the rear of the vehicle body along a space provided on the inside of the convex part (52C), and widths (W2) of the pair of flat plate parts (52L,52R) in vehicle width direction are preferably greater than a width (W1) of the convex part (52C).

11. Saddle-riding vehicle according to one of claims 1 to 10, wherein the front opening (91) is positioned higher than the radiator (61).

12. Saddle-riding vehicle according to one of claims 1 to 11, wherein the main surface (611) of the radiator (61) is substantially orthogonal to a direction in which air flows through the ventilation duct (90).

13. Saddle-riding vehicle according to one of claims 1 to 12, wherein a wind guard member (95) is placed below the footboard part (52) and, preferably, extends toward the footboard part (52) from a rear portion of the main surface (611) of the radiator (61).

14. Saddle-riding vehicle according to one of claims 1 to 13, wherein a seat (25) on which a rider can sit is provided and a fuel tank (26) configured to store fuel to be supplied to the driving source (31) is placed below the seat (25).

15. Saddle-riding vehicle according to one of claims 1 to 14, wherein the radiator (61) has a radiator core (610) through which cooling water flows and at least one radiator tank (61 L,61 R) configured to store the cooling water, and the radiator tank (61L,61R) is preferably placed on a side of the radiator core (610).

## Patentansprüche

1. Fahrzeug vom Spreizsitz- Typ, aufweisend:
eine Fahrzeugkarosserie und eine Antriebsquelle (31), wobei sich ein unterer Rahmen (42) nach unten von einem Lenkkopfrohr (41) erstreckt;
ein vorderes Abdeckteil (51), das mit einer vorderen Öffnung (91), die sich in Richtung nach vorn der Fahrzeugkarosserie öffnet, versehen ist, wobei das vordere Abdeckteil (51) einen Lüftungskanal (90) aufweist, konfiguriert, um Luft, die eingeströmt ist, von der vorderen Öffnung (91) in Richtung zu einem Kühler (61) zu leiten, konfiguriert, die Antriebsquelle (31) zu kühlen;
ein Trittbrettteil (52), auf das die Füße des Fahrers gesetzt werden können, wobei sich das Trittbrettteil (52) in Richtung nach hinten zu einer Rückseite der Fahrzeugkarosserie von einem hinteren Teil (51 a) des vorderen Abdeckteils (51) erstreckt; und
der Kühler (61) niedriger als das Trittbrettteil (52) angeordnet ist mit einer Hauptoberfläche (611) des Kühlers (61), die horizontal ausgerichtet oder geneigt ist,
wobei zumindest ein Teil der Hauptoberfläche (611) weiter nach vorn in der Fahrzeugkarosserie als eine nach unten gedachte Verlängerungsoberfläche (L1) eines Abschnittes des vorderen Abdeckteils (51), das eine Rückwand des Lüftungskanales (90) bildet, positioniert ist, wobei das vordere Abdeckteil (51) einen Umfang des unteren Rahmens (42) einhüllt und eine Vorderseite des Kühlers (61) durch ein inneres Schutzblech (511), das sich nach unten von einer Bodenkante der vorderen Öffnung (91) erstreckt, abgedeckt ist.

2. Fahrzeug vom Spreizsitz- Typ nach Anspruch 1, wobei das vordere Abdeckteil (51) von dem unteren Rahmen (42) separat ist.

3. Fahrzeug vom Spreizsitz- Typ nach Anspruch 1 oder 2, wobei ein Vorderrad (21) mit der Fahrzeugkarosserie vor dem vorderen Abdeckteil (51)verbunden ist und die vordere Öffnung (91) höher als das Vorderrad (21) positioniert ist.

4. Fahrzeug vom Spreizsitz- Typ nach Anspruch 2 oder 3, wobei sich ein Seitenrahmen (43) in Richtung nach hinten der Fahrzeugkarosserie von einem Bodenteil des unteren Rahmens (42) erstreckt und vorzugsweise die Antriebsquelle (31) schwingbar mit dem Seitenrahmen (43) verbunden ist.

5. Fahrzeug vom Spreizsitz- Typ nach einem der Ansprüche 1 bis 4, wobei ein Bodenteil (51 D, 51 1 D) des vorderen Abdeckteils (51) den Lüftungskanal (90) bildet und / oder ein Luftgebläse (62) konfiguriert ist, Luft zu dem Kühler (61) zu blasen, wobei das Luftgebläse vorzugsweise in vertikaler Ausrichtung mit dem Kühler (61) angeordnet ist.

6. Fahrzeug vom Spreizsitz- Typ nach Anspruch 5, wobei das Luftgebläse (62) oberhalb der Hauptoberfläche (611) des Kühlers (61) angeordnet ist.

7. Fahrzeug vom Spreizsitz- Typ nach Anspruch 5 oder 6, wobei das Luftgebläse (62) konfiguriert ist, Luft nach unten von oberhalb des Kühlers (61) zu blasen.

8. Fahrzeug vom Spreizsitz- Typ nach einem der Ansprüche 5 bis 7, wobei sich ein unteres Abdeckteil (53) in Richtung nach hinten der Fahrzeugkarosserie von einem Bodenteil des inneren Schutzblechs (511) in eine niedrigere Position als das Trittbrettteil (52) erstreckt, die Hauptoberfläche (611) des Kühlers (61) eine Oberseite des Kühlers (61) repräsentiert, wobei der Kühler (61) eine Unterseite (612) hat, vorgesehen auf einer Seite, gegenüberliegend der Hauptoberfläche (611) und zumindest ein Abschnitt der Unterseite (612) und beide Seiten des Kühlers (61) vorzugsweise durch ein unteres Abdeckteil (53) abgedeckt sind, und vorzugsweise ein Bodenöffnung (92), die sich nach unten öffnet, in einem Abschnitt des unteren Abdeckteiles (53), das sich der Unterseite (612) zugewandt ist, vorgesehen ist.

9. Fahrzeug vom Spreizsitz- Typ nach einem der Ansprüche 1 bis 8, wobei das Trittbrettteil (52) als eine flache Platte geformt ist.

10. Fahrzeug vom Spreizsitz- Typ nach einem der Ansprüche 1 bis 9, wobei das Trittbrettteil (52) ein Paar von flachen Plattenteilen (52L, 52R) aufweist und ein konvexes Teil (52C), vorzugsweise in einer nach oben konvexen Form gebildet, sich in Längsrichtung der Fahrzeugkarosserie zwischen dem Paar von flachen Plattenteilen (52L, 52R) erstreckt, sich ein unterer Rahmen (42) vorzugsweise in Richtung zu der Rückseite der Fahrzeugkarosserie entlang eines Raumes, vorgesehen an der Innenseite des konvexen Teiles (52C), erstreckt und Breiten (W2) des Paares von flachen Plattenteilen (52L, 52R) in Richtung der Breite des Fahrzeuges vorzugsweise größer als eine Breite (W1) des konvexen Teiles (52C) sind.

11. Fahrzeug vom Spreizsitz- Typ nach einem der Ansprüche 1 bis 10, wobei die vordere Öffnung (91) höher als der Kühler (61) positioniert ist.

12. Fahrzeug vom Spreizsitz- Typ nach einem der Ansprüche 1 bis 11, wobei die Hauptoberfläche (611) des Kühlers (61) im Wesentlichen rechtwinklig zu einer Richtung ist, in der Luft durch den Lüftungskanal (90) strömt.

13. Fahrzeug vom Spreizsitz- Typ nach einem der Ansprüche 1 bis 12, wobei ein Windschutzteil (95) unter dem Trittbrettteil (52) angeordnet ist und sich vorzugsweise in Richtung zu dem Trittbrettteil (52) von einem hinteren Abschnitt der Hauptoberfläche (611) des Kühlers (61) erstreckt.

14. Fahrzeug vom Spreizsitz- Typ nach einem der Ansprüche 1 bis 13, wobei ein Sitz (25), auf dem ein Fahrer sitzen kann, vorgesehen ist und ein Kraftstofftank (26), konfiguriert Kraftstoff, der zu der Antriebsquelle (31) zugeführt wird, unter dem Sitz (25) angeordnet ist.

15. Fahrzeug vom Spreizsitz- Typ nach einem der Ansprüche 1 bis 14, wobei der Kühler (61) einen Kühlerkern (610), durch den Kühlwasser fließt und zumindest ein Kühlertank (61 L, 61 R), konfiguriert das Kühlwasser zu speichern, hat und wobei der Kühlertank (61 L, 61 R) vorzugsweise auf der Seite des Kühlerkerns (610) angeordnet ist.

## Revendications

1. Véhicule du type à enfourcher comprenant :
un corps de véhicule et une source d'entraînement (31), étant précisé qu'un cadre inférieur (42) s'étend vers le bas à partir d'un tube supérieur de direction (41) ;
une partie formant capot avant (51) qui est pourvue d'une ouverture avant (91) débouchant vers l'avant du corps de véhicule, ladite partie formant capot avant (51) comprenant un conduit de ventilation (90) conçu pour faire passer l'air qui est entré par l'ouverture avant (91) vers un radiateur (61) conçu pour refroidir la source d'entraînement (31) ;
une partie formant repose-pieds (52) sur laquelle le motocycliste peut poser les pieds, la partie formant repose-pieds (52) s'étendant vers l'arrière du corps de véhicule à partir d'une partie arrière (51a) de la partie formant capot avant (51) ; et
le radiateur (61) étant placé plus bas que la partie formant repose-pieds (52), avec une surface principale (611) du radiateur (61) qui est orientée à l'horizontale ou inclinée,
étant précisé qu'une partie au moins de la surface principale (611) est placée plus en avant, dans le corps de véhicule, qu'une surface d'extension imaginaire dirigée vers le bas (L1) d'une partie de ladite partie formant capot avant (51) constituant une paroi arrière du conduit de ventilation (90), que la partie formant capot avant (51) entoure une périphérie du cadre inférieur (42), et que l'avant du radiateur (61) est couvert par une protection intérieure (511) qui s'étend vers le bas à partir d'un bord inférieur de l'ouverture avant (91).

2. Véhicule du type à enfourcher selon la revendication 1, étant précisé que la partie formant capot avant (51) est séparée du cadre inférieur (42).

3. Véhicule du type à enfourcher selon la revendication 1 ou 2, étant précisé qu'une roue avant (21) est fixée au corps de véhicule devant la partie formant capot avant (51), et que l'ouverture avant (91) est placée plus haut que la roue avant (21).

4. Véhicule du type à enfourcher selon la revendication 2 ou 3, étant précisé qu'un cadre latéral (43) s'étend vers l'arrière du corps de véhicule à partir d'une partie inférieure du cadre inférieur (42), et que la source d'entraînement (31) est de préférence fixée pivotante au cadre latéral (43).

5. Véhicule du type à enfourcher selon l'une des revendications 1 à 4, étant précisé qu'une partie inférieure (51D, 511D) de la partie formant capot avant (51) constitue le conduit de ventilation (90), et/ou qu'une soufflante (62) est conçue pour projeter de l'air vers le radiateur (61), la soufflante (62) étant de préférence placée dans l'alignement vertical du radiateur (61).

6. Véhicule du type à enfourcher selon la revendication 5, étant précisé que la soufflante (62) est placée au-dessus de la surface principale (611) du radiateur (61).

7. Véhicule du type à enfourcher selon la revendication 5 ou 6, étant précisé que la soufflante (62) est conçue pour projeter de l'air vers le bas à partir du dessus du radiateur (61).

8. Véhicule du type à enfourcher selon l'une des revendications 5 à 7, étant précisé qu'une partie formant capot inférieur (53) s'étend vers l'arrière du corps de véhicule à partir d'une partie inférieure de la protection intérieure (511), plus bas que la partie formant repose-pieds (52), que la surface principale (611) du radiateur (61) représente une surface supérieure du radiateur (61), que le radiateur (61) a une surface inférieure (612) disposée sur un côté opposé à la surface principale (611), et qu'une partie au moins de la surface inférieure (612) et les deux côtés du radiateur (61) sont de préférence couverts par la partie formant capot inférieur (53), et qu'une ouverture inférieure (92) qui débouche vers le bas est de préférence prévue dans une partie de ladite partie formant capot inférieur (53) qui fait face à la surface inférieure (612).

9. Véhicule du type à enfourcher selon l'une des revendications 1 à 8, étant précisé que la partie formant repose-pieds (52) a la forme d'une plaque plate.

10. Véhicule du type à enfourcher selon l'une des revendications 1 à 9, étant précisé que la partie formant repose-pieds (52) comprend deux parties formant plaques plates (52L, 52R) et une partie convexe (52C) qui a de préférence une forme convexe vers le haut, que la partie convexe (52C) s'étend dans le sens longitudinal du corps de véhicule entre les deux parties formant plaques plates (52L, 52R), qu'un cadre inférieur (42) s'étend de préférence vers l'arrière du corps de véhicule le long d'un espace prévu sur l'intérieur de la partie convexe (52C), et que les largeurs (W2) des deux parties formant plaques plates (52L, 52R) dans le sens de la largeur du véhicule sont de préférence plus grandes qu'une largeur (W1) de la partie convexe (52C).

11. véhicule du type à enfourcher selon l'une des revendications 1 à 10, étant précisé que l'ouverture avant (91) est placée plus haut que le radiateur (61).

12. Véhicule du type à enfourcher selon l'une des revendications 1 à 11, étant précisé que la surface principale (611) du radiateur (61) est globalement orthogonale par rapport à un sens dans lequel l'air traverse le conduit de ventilation (90).

13. véhicule du type à enfourcher selon l'une des revendications 1 à 12, étant précisé qu'un élément pare-vent (95) est placé sous la partie formant repose-pieds (52) et s'étend de préférence vers celle-ci à partir d'une partie arrière de la surface principale (611) du radiateur (61).

14. Véhicule du type à enfourcher selon l'une des revendications 1 à 13, étant précisé qu'il est prévu un siège (25) sur lequel un motocycliste peut s'asseoir, et qu'un réservoir de carburant (26) conçu pour stocker du carburant à fournir à la source d'entraînement (31) est placé sous le siège (25).

15. Véhicule du type à enfourcher selon l'une des revendications 1 à 14, étant précisé que le radiateur (61) a un corps de radiateur (610) à travers lequel passe de l'eau de refroidissement, et au moins un réservoir de radiateur (61L, 61R) conçu pour stocker l'eau de refroidissement, et que le réservoir de radiateur (61L, 61R) est de préférence placé sur un côté du corps de radiateur (610).
